# EUROPÄISCHE PATENTSCHRIFT

(11) **EP 3 042 430 B1**
(45) Veröffentlichungstag und Bekanntmachung des Hinweises auf die Patenterteilung: **08.11.2017**
(21) Anmeldenummer: 14758542.6
(22) Anmeldetag: 01.09.2014
(51) Int. Cl.: H02J 3/38, H02J 3/32, H02J 7/35

(54) **VERFAHREN ZUM UND EINSPEISESTEUERUNG FÜR DAS EINSPEISEN VON ELEKTRISCHEM STROM IN EINEN LEITUNGSZWEIG**
METHOD AND SUPPLY CONTROL FOR THE SUPPLYING OF ELECTRICAL CURRENT TO A CONDUCTOR BRANCH
PROCÉDÉ POUR L'INJECTION DE COURANT ÉLECTRIQUE, ET LA COMMANDE POUR L'INJECTION DE COURANT ÉLECTRIQUE DANS UNE BRANCHE DE LIGNE

(30) Priorität: 03.09.2013 DE 102013109608
(43) Veröffentlichungstag der Anmeldung: 13.07.2016
(73) Patentinhaber: SMA Solar Technology AG, 34266 Niestetal (DE)
(72) Erfinder: SOFALY, Bernhard, 90402 Nürnberg (DE); PRIOR, Oliver, 34431 Marsberg (DE)
(86) Internationale Anmeldenummer: PCT/EP2014/068526
(87) Internationale Veröffentlichungsnummer: WO 2015/032722

(56) Entgegenhaltungen:
- EP-A1- 2 498 364
- EP-A1- 2 587 623
- US-A1- 2011 121 652

## Beschreibung

### TECHNISCHES GEBIET DER ERFINDUNG

Die Erfindung betrifft ein Verfahren zum Einspeisen von elektrischem Strom von einer Energieerzeugungsanlage und einem externen Energieversorgungsnetz in einen durch eine Leitungsschutzsicherung abgesicherten Leitungszweig einer elektrischen Installation, der für einen Strom bis zu einem maximal zulässigen Wert ausgelegt ist. Weiterhin betrifft die Erfindung eine Einspeisesteuerung für das Einspeisen von elektrischem Strom von einer Energieerzeugungslage und einem externen Energieversorgungsnetz in einen solchen Leitungszweig einer elektrischen Installation.

Insbesondere kann es sich bei der elektrischen Installation um eine Hausinstallation handeln, wobei die Hausinstallation zur Eigenversorgung des Haushalts mit einer Photovoltaikanlage (PV-Anlage) ausgestattet ist.

### STAND DER TECHNIK

Bei bekannten Hausinstallationen, die mit einer PV-Anlage zur Eigenversorgung ausgestattet sind, ist die PV-Anlage derart ausgelegt, dass sie maximal so viel elektrischen Strom in einen Leitungszweig der Hausinstallation einspeist, dass ein in dem Leitungszweig fließender Strom einen maximal zulässigen Wert nicht überschreitet. Um die Energieversorgung auch dann sicherzustellen, wenn von der PV-Anlage nicht ausreichend elektrischer Strom erzeugt und eingespeist wird, ist der Leitungszweig an ein externes Energieversorgungsnetz angeschlossen. Üblicherweise erfolgt der Anschluss an das externe Energieversorgungsnetz über einen Energiezähler, der mit einer Leitungsschutzsicherung ausgestattet ist. Über die Leitungsschutzsicherung wird sichergestellt, dass nicht mehr elektrischer Strom von dem externen Energieversorgungsnetz in den Leitungszweig eingespeist wird, als für den Leitungszweig zulässig ist. Die PV-Anlage ist jedoch nicht unbedingt über den Energiezähler mit der Leitungsschutzsicherung an den Leitungszweig angeschlossen, sondern an einer anderen Stelle des Leitungszweigs, beispielsweise an seinem Ende im Bereich des Hausdachs. Da der von der PV-Anlage erzeugte und eingespeiste Strom dann nicht durch die Leitungsschutzsicherung des betreffenden Leitungszweigs fließt, kann der Fall auftreten, dass mehr Strom in den Leitungszweig eingespeist wird, als zulässig ist; d. h. der Leitungszweig ist durch die Leitungsschutzsicherung nicht vor einem Überstromzustand, in dem der in dem Leitungszweig fließende Strom den maximal zulässigen Wert überschreitet, geschützt.

Aus der Druckschrift US 2011 / 0241426 A1 und der zur selben Patentfamilie gehörigen US 8,362,646 B2 ist ein Verfahren bekannt, mit dem Überstromzustände innerhalb eines Leitungszweigs mit zwei getrennten Stromeinspeisungen vermieden werden sollen. Dazu ist im Bereich des Anschlusspunktes für das externe Energieversorgungsnetz ein Stromsensor vorgesehen, mit dem der von dem externen Energieversorgungsnetz eingespeiste Strom erfasst wird. Dieser Wert wird an eine Steuerung eines Wechselrichters der PV-Anlage übermittelt. Von der Steuerung wird dann überprüft, ob die Summe aus einem von dem externen Energieversorgungsnetz eingespeisten Strom und einem von der PV-Anlage eingespeisten Strom den maximal zulässigen Stromwert für den entsprechenden Leitungszweig überschreitet. Wenn der maximal zulässige Stromwert überschritten wird, wird die PV-Anlage abgeschaltet oder derart abgeregelt, dass die Summe der eingespeisten Ströme den zulässigen Stromwert nicht überschreitet. Ein Abschalten der PV-Anlage erfolgt auch dann, wenn die Informationen, die erforderlich sind, um zu überprüfen, ob die Summe aus einem von dem externen Energieversorgungsnetz eingespeisten Strom und einem von der PV-Anlage eingespeisten Strom den maximal zulässigen Stromwert für den entsprechenden Leitungszweig überschreitet, nicht eingehen. Wenn beim Überschreiten des zulässigen Stromwerts durch die Summe beider Stromeinspeisungen die PV-Anlage auf die Befehle zum Abschalten oder Abregeln nicht reagiert, wird der Strom auch durch eine am Anschlusspunkt für das externe Energieversorgungsnetz vorgesehene Leitungsschutzsicherung nicht abgeschaltet.

Aus der Druckschrift EP 2 388 879 A1 ist ein anderes Verfahren bekannt, mit dem Überstromzustände innerhalb eines Leitungszweigs, in den elektrischer Strom von einem externen Energieversorgungsnetz und elektrischer Strom von einer lokalen Energieerzeugungsanlage eingespeist werden, vermieden werden sollen. Dazu ist im Bereich des Anschlusspunkts für das externe Energieversorgungsnetz eine Schutzeinrichtung vorgesehen. Die Schutzeinrichtung empfängt einerseits einen Messwert eines Stroms, der von dem externen Energieversorgungsnetz eingespeist wird, und andererseits einen Messwert eines Stroms, der zum gleichen Zeitpunkt von der lokalen Energieerzeugungsanlage eingespeist wird. Von der Schutzeinrichtung wird eine Summe der beiden Messwerte ermittelt. Übersteigt die Summe der eingespeisten Ströme den maximal zulässigen Wert für den Strom in dem Leitungszweig, wird ein Schutzschalter geöffnet, der den Leitungszweig von dem externen Energieversorgungsnetz trennt. Die einzelnen Messwerte werden am Ort Ihrer Erzeugung mit einem Zeitstempel versehen. Bis die Schutzeinrichtung alle zu dem gleichen Zeitpunkt zugehörigen Messwerte empfangen hat, werden die schon vorliegenden Messwerte zwischengespeichert.

Aus der Druckschrift US 6,605,881 B2 ist eine Anschlussdose bekannt, über die eine PV-Anlage und ein externes Energieversorgungsnetz an einen Leitungszweig mit einer Last angeschlossen werden können. Am Anschlusspunkt für den Leitungszweig mit der Last ist ein Stromsensor vorgesehen, über den ein zur Last fließender Strom detektiert wird. Außerdem ist ein Spannungssensor vorgesehen, mit der die Spannung des externen Energieversorgungsnetzes detektiert wird. Aus den beiden Werten kann ermittelt werden, welche Leistung momentan von der Last verbraucht wird. Die PV-Anlage wird dann in Abhängigkeit von der von der Last benötigten Leistung gesteuert, wobei sichergestellt wird, dass die von dem externen Energieversorgungsnetz eingespeiste Leistung einen vorbestimmten Wert nicht unterschreitet. Zur Sicherung vor einem Überstromzustand weist die Anschlussdose einen Schutzschalter auf, mit dem der Leitungszweig von der PV-Anlage und dem externen Energieversorgungsnetz getrennt werden kann, wenn die Summe der beiden Ströme größer ist als ein maximal zulässiger Strom des Leitungszweigs mit der Last.

Aus der Druckschrift WO 02/29954 A1 ist der Einsatz einer steuerbaren Überstromsicherung für die Anbindung einer Last an ein Energieversorgungsnetz bekannt. Indem die Überstromsicherung beispielsweise hinsichtlich ihrer Auslöseschwelle und ihrer Auslösecharakteristika angepasst werden kann, soll die Überstromsicherung flexibel für verschiedene Lasten eingesetzt werden können, wobei durch Berücksichtigung ihrer verschiedenen Anforderungen jeweils optimaler Schutz vor einem Überstromzustand gewährleistet werden kann.

Die Druckschrift EP 2587623 A1 zeigt ein DC-Leistungsverteilungssystem, bei dem von einem PV-Generator über einen Wandler und von einem AC-Netz über einen AC/DC-Wandler jeweils auf einen DC-Bus eingespeiste Ströme auf Maximalwerte begrenzt werden.

### AUFGABE DER ERFINDUNG

Der Erfindung liegt die Aufgabe zugrunde, ein Verfahren aufzuzeigen, bei dem elektrischer Strom von einer Energieerzeugungsanlage und einem externen Energieversorgungsnetz in einen Leitungszweig eingespeist werden kann, wobei sicher verhindert ist, dass ein maximal zulässiger Wert des Stroms in dem Leitungszweig überschritten wird. Gleichzeitig soll eine unnötige Drosselung des von der Energieerzeugungsanlage eingespeisten Stroms vermieden werden. Weiterhin liegt der Erfindung die Aufgabe zugrunde, eine Einspeisesteuerung für das Einspeisen von elektrischem Strom von einer Energieerzeugungsanlage und einem externen Energieversorgungsnetz in einen Leitungszweig einer elektrischen Installation aufzuzeigen, mit der das Auftreten eines größeren Stroms als dem maximal zulässigen Strom in dem Leitungszweig sicher verhindert ist.

### LÖSUNG

Die Aufgabe der Erfindung wird erfindungsgemäß mit den Merkmalen der unabhängigen Patentansprüche 1 und 13 gelöst. Weitere bevorzugte erfindungsgemäße Ausgestaltungen sind den abhängigen Patentansprüchen zu entnehmen.

### BESCHREIBUNG DER ERFINDUNG

Bei den aus dem Stand der Technik bekannten Vorgehensweisen wird das Einspeisen von elektrischem Strom von einer PV-Anlage und einem externen Energieversorgungsnetz derart gesteuert, dass die PV-Anlage dann abgeregelt wird, nachdem über entsprechende Sensoren detektiert worden ist, dass mehr Strom in einen Leitungszweig eingespeist wird, als zulässig ist. Damit liegt zwangsläufig zumindest für eine gewisse Zeitdauer ein Überstromzustand vor. Auch bei der aus der EP 2 388 879 A1 bekannten Vorgehensweise kann nicht sicher ausgeschlossen werden, dass zumindest kurzzeitig ein Überstromzustand vorliegt, da zunächst der von der lokalen Energieerzeugungsanlage eingespeiste Strom gemessen und an die Schutzeinrichtung zum Abschalten der Stromeinspeisung des externen Energieversorgungsnetzes übermittelt werden muss. Die Zeitdauer, über die ein Überstromzustand in Kauf genommen werden muss, hängt bei den aus dem Stand der Technik bekannten Vorgehensweisen insbesondere von der Empfindlichkeit der Sensoren, der Schnelligkeit der Kommunikation sowie der Zeitdauer, die für die Abregelung der PV-Anlage benötigt wird, ab. U. a. muss die Kommunikation mit der PV-Anlage oder mit der Schutzeinrichtung in einem solchen System erhöhten Anforderungen hinsichtlich deren Zuverlässigkeit gerecht werden, da sie mitverantwortlich für die Sicherheit der Hausinstallation ist. Insbesondere kann bei einem Ausfall der Kommunikation oder langen Datenlaufzeiten bei der Kommunikation die Sicherheit der Hausinstallation - zumindest ohne zusätzliche und gegebenenfalls aufwändige Maßnahmen - nicht ausreichend gewährleistet sein.

Erfindungsgemäß wurde erkannt, dass ein solcher Überstromzustand vermieden werden kann, wenn der Strom von dem externen Energieversorgungsnetz über eine Leitungsschutzsicherung mit einem veränderbaren Grenzwert für den von dem externen Energieversorgungsnetz eingespeisten Strom eingespeist wird und das Einspeisen von mehr Strom von der Energieerzeugungsanlage in Abhängigkeit von dem veränderbaren Grenzwert erfolgt. Dazu wird ein Maximalstrom für den von der Energieerzeugungsanlage eingespeisten Strom von einer Einspeisesteuerung gesteuert erst dann hochgesetzt, nachdem der Grenzwert der Leitungsschutzsicherung von der Einspeisesteuerung gesteuert soweit herabgesetzt, d. h. reduziert worden ist, dass der maximal zulässige Wert des Stroms in dem Leitungszweig nicht überschritten wird. Weder an der Energieerzeugungsanlage noch an der Leitungsschutzsicherung sind dann weitere Informationen dafür erforderlich, um zu verhindern, dass mehr Strom eingespeist wird als der maximal zulässige Wert. Beispielsweise ist es für die Steuerung der Energieerzeugungsanlage nicht erforderlich, zu ermitteln, wieviel Strom momentan von dem externen Energieversorgungsnetz eingespeist wird, da bereits über den Maximalstrom berücksichtigt ist, wieviel Strom maximal von dem externen Energieversorgungsnetz eingespeist werden kann.

Bei einem erfindungsgemäßen Verfahren wird elektrischer Strom zum einen von einem externen Energieversorgungsnetz und zum anderen von einer Energieerzeugungsanlage in den Leitungszweig eingespeist. Für das Einspeisen von Strom von dem externen Energieversorgungsnetz in den Leitungszweig ist eine Leitungsschutzsicherung vorgesehen, die einen veränderbaren Grenzwert für den eingespeisten Strom vorgibt. Durch den Grenzwert der Leitungsschutzsicherung wird der von dem externen Energieversorgungsnetz eingespeiste Strom begrenzt. Ein Überschreiten des Grenzwerts würde - gegebenenfalls nach einer vorgegebenen Zeitdauer oder einer innerhalb der Leitungsschutzsicherung hinterlegten und vorprogrammierbaren Auslösecharakteristik - zum Auslösen der Leitungsschutzsicherung führen.

Das Einspeisen des von der Energieerzeugungsanlage erzeugten Stroms wird gemäß dem erfindungsgemäßen Verfahren derart gesteuert, dass nicht mehr als ein bestimmter Maximalstrom eingespeist wird. Dieser Maximalstrom kann aber verändert werden. Beispielsweise kann der Maximalstrom hochgesetzt werden, um mehr Strom von der Energieerzeugungsanlage in den Leitungszweig einspeisen zu können. Gemäß dem erfindungsgemäßen Verfahren wird der Maximalstrom jedoch nur dann hochgesetzt, um mehr Strom von der Energieerzeugungsanlage in den Leitungszweig einspeisen zu können, nachdem der Grenzwert der Leitungsschutzsicherung derart angepasst wurde, dass der maximal zulässige Wert des Stroms in dem Leitungszweig auch nach dem Hochsetzen des Maximalstroms nicht überschritten wird. Dabei wird das Hochsetzen des Maximalstroms von der Einspeisesteuerung gesteuert, die auch das Herabsetzen des Grenzwerts der Leitungsschutzsicherung steuert. Wird der Grenzwert der Leitungsschutzsicherung nicht angepasst, z. B. weil der Grenzwert schon seinen Minimalwert erreicht hat, wird der Maximalstrom nicht hochgesetzt, auch wenn mehr Strom für das Einspeisen von der Energieerzeugungsanlage verfügbar ist. Insgesamt wird so gewährleistet, dass der maximal zulässige Wert des Stroms in dem Leitungszweig durch eine erhöhte Stromeinspeisung von der Energieerzeugungsanlage nicht überschritten wird. Vielmehr wird der Maximalstrom immer derart an den Grenzwert der Leitungsschutzsicherung angepasst, dass der maximal zulässige Wert des Stroms nicht überschritten werden kann. Dies bedeutet allerdings nicht, dass der maximal zulässige Wert für den Strom in dem Leitungszweig niemals überschritten werden kann. Beispielsweise kann durch das Zuschalten eines zusätzlichen Verbrauchers in dem Leitungszweig ein kurzfristiger tolerierbarer Überstromzustand vorliegen, bei dem die Leitungsschutzsicherung aufgrund ihrer Auslösecharakteristik nicht auslöst und auch nicht auslösen soll.

Entsprechend wird, wenn im Folgenden davon die Rede ist, dass das Überschreiten des maximal zulässigen Wert des Stroms in dem Leitungszweig verhindert ist, hierunter verstanden, dass dieser Wert aufgrund des Hochsetzens des Maximalstroms der Energieerzeugungsanlage zumindest nicht mehr oder länger überschritten werden kann, als es die Auslösecharakteristik der Leitungsschutzsicherung sowieso zulässt.

Wenn von der Energieerzeugungsanlage mehr Strom als der Maximalstrom in den Leitungszweig eingespeist werden kann, kann der Grenzwert der Leitungsschutzsicherung in einem Schritt um einen dem zusätzlich verfügbaren Strom entsprechenden Betrag angepasst werden.

Nach dem Herabsetzen des Grenzwerts der Leitungsschutzsicherung wird dann der Maximalstrom um diesen Betrag hochgesetzt.

Es kann aber auch vorgesehen sein, dass der Grenzwert und der Maximalstrom schrittweise angepasst werden. Mit einer schrittweisen Anpassung kann eine Art weiche Steuerung, d. h. ein im Wesentlichen sprungfreier Verlauf des Maximalstroms erreicht werden, wobei die Grenze für den insgesamt in den Leitungszweig eingespeisten Strom auch während des Anpassens nicht wesentlich von dem maximal zulässigen Wert für den Strom in dem Leitungszweig abweicht. Für eine besonders weiche Steuerung kann eine kleinschrittige Anpassung gewählt werden. Soll die Anpassung besonders schnell erfolgen, kann es vorteilhaft sein, größere oder schneller aufeinanderfolgende Schritte zu wählen. Insbesondere kann durch das schrittweise Anpassen anstatt eines einmaligen sprunghaften Herabsetzens des Grenzwerts der Leitungsschutzsicherung das Risiko für eine ungewollte Fehlauslösung der Leitungsschutzsicherung minimiert werden.

Weiterhin können der Grenzwert und der Maximalstrom unter Berücksichtigung vorgegebener zeitlicher Verläufe angepasst werden. Beispielsweise kann die Anpassung des Maximalstroms zeitverzögert zu der Anpassung des Grenzwerts erfolgen, wobei der Maximalstrom mit dem gleichen, u. U. stufenlosen zeitlichen Verlauf wie der Grenzwert angepasst wird. Für das Anpassen kann beispielsweise eine Rampe als zeitlicher Verlauf vorgegeben sein.

Das Anpassen des Grenzwerts und des Maximalstroms wird von der Einspeisesteuerung gesteuert. Die Einspeisesteuerung, die Leitungsschutzsicherung und die Energieerzeugungsanlage können dabei als separate Einheiten ausgebildet sein, wobei die Einspeisesteuerung zur Steuerung des Grenzwerts und der Maximalleistung mit der Leitungsschutzsicherung und der Energieerzeugungsanlage verbunden ist. Vorzugsweise ist die Einspeisesteuerung jedoch integral mit der Leitungsschutzsicherung ausgebildet, wobei die Einspeisesteuerung zur Vorgabe des Maximalstroms mit der Energieerzeugungsanlage verbunden ist.

Gemäß einer Ausführungsform des erfindungsgemäßen Verfahrens wird von der Energieerzeugungsanlage ein Anfragesignal an die Einspeisesteuerung gesendet, wenn mehr Strom als der aktuelle Maximalstrom von der Energieerzeugungsanlage in den Leitungszweig eingespeist werden könnte. In Reaktion auf das Anfragesignal wird dann - sofern möglich - der Grenzwert der Leitungsschutzsicherung von der Einspeisesteuerung gesteuert um einen bestimmten Betrag verringert. Wenn der Grenzwert um den bestimmten Betrag verringert ist, wird ein Steuersignal von der Einspeisesteuerung an die Energieerzeugungsanlage gesendet, mit dem das Erhöhen des Maximalstroms für das Einspeisen von zusätzlichem Strom um den bestimmten Betrag freigegeben wird. So ist sichergestellt, dass der Maximalstrom von der Einspeisesteuerung gesteuert erst nach dem Herabsetzen des Grenzwerts der Leitungsschutzsicherung hochgesetzt wird.

Das Anfragesignal kann unmittelbar in Reaktion darauf, dass erkannt wird, dass mehr Strom als der aktuelle Maximalstrom von der Energieerzeugungsanlage eingespeist werden könnte, von der Energieerzeugungsanlage an die Einspeisesteuerung gesendet werden. Alternativ kann aber auch vorgesehen sein, dass das Anfragesignal nur in Reaktion auf ein Abfragesignal, das von der Einspeisesteuerung an die Energieerzeugungsanlage gesendet wird und mit dem abgefragt wird, welcher Strom momentan in den Leitungszweig eingespeist werden könnte, gesendet wird. In dem Fall übernimmt also die Einspeisesteuerung den aktiven Teil der Steuerung, während die Energieerzeugungsanlage lediglich auf die Signale der Einspeisesteuerung reagiert.

Der Betrag, um den der Grenzwert der Leitungsschutzsicherung und anschließend der Maximalstrom angepasst werden, kann jeweils dem Betrag an zusätzlich verfügbarem Strom von der Energieerzeugungsanlage entsprechen. Es kann aber auch vorgesehen sein, dass die Anpassung des Grenzwerts und des Maximalstroms in mehreren Schritten erfolgt, indem der Grenzwert und der Maximalstrom jeweils nur um einen Bruchteil verringert bzw. hochgesetzt werden. Beispielsweise können der Grenzwert und der Maximalstrom bei einer schrittweisen Anpassung in jedem Anpassungsschritt um einen fest vorgegebenen Betrag angepasst werden, wobei die Zahl der Anpassungsschritte von dem Betrag an zusätzlich verfügbarem Strom abhängt.

Um sicherzustellen, dass der Maximalstrom in Reaktion auf ein zuvor gesendetes Anfragesignal angepasst wird, kann vorgesehen sein, dass der Maximalstrom nur dann hochgesetzt wird, wenn das Steuersignal innerhalb eines vorgegebenen Zeitintervalls nach dem Senden des Anfragesignals von der Energieerzeugungsanlage empfangen wird. Dadurch kann beispielsweise verhindert werden, dass es zu einem Hochsetzten des Maximalstroms kommt, obwohl gar kein Anfragesignal gesendet worden ist. In weiterer Ausgestaltung kann nach dem Erhalt eines Steuersignals, das außerhalb des vorgegebenen Zeitintervalls empfangen wird, autoweise verhindert werden, dass es zu einem Hochsetzten des Maximalstroms kommt, obwohl gar kein Anfragesignal gesendet worden ist. In weiterer Ausgestaltung kann nach dem Erhalt eines Steuersignals, das außerhalb des vorgegebenen Zeitintervalls empfangen wird, automatisch ein Anfragesignal von der Energieerzeugungsanlage gesendet werden, um sicherzustellen, dass der Grenzwert der Leitungsschutzsicherung und der Maximalstrom aufeinander abgestimmt und an die tatsächlich vorliegenden Verhältnisse angepasst sind.

Weiterhin kann vorgesehen sein, dass nach einem vorgegebenen Zeitintervall, in dem kein Steuersignal als Reaktion auf ein Anfragesignal empfangen worden ist, ein weiteres Anfragesignal von der Energieerzeugungsanlage an die Einspeisesteuerung gesendet wird.

Damit von der Einspeisesteuerung erkannt werden kann, ob der Grenzwert tatsächlich herabgesetzt und/oder der Maximalstrom tatsächlich hochgesetzt worden ist, kann nach dem Herabsetzen des Grenzwerts ein Bestätigungssignal von der Leitungsschutzsicherung und/oder nach dem Hochsetzen des Maximalstroms ein Bestätigungssignal von der Energieerzeugungsanlage an die Einspeisesteuerung gesendet werden. Insbesondere kann vorgesehen sein, dass ein Steuersignal erst dann von der Einspeisesteuerung an die Energieerzeugungsanlage gesendet wird, wenn ein Bestätigungssignal der Leitungsschutzsicherung zum Herabsetzen des Grenzwerts vorliegt. Weiterhin kann vorgesehen sein, dass auf ein weiteres Anfragesignal erst dann reagiert wird, wenn ein Bestätigungssignal der Energieerzeugungsanlage zu einem vorhergehenden Anfragesignal bereits vorliegt.

Durch die voranstehenden Maßnahmen wird sichergestellt, dass das Auslösen der Leitungsschutzsicherung, wenn zu große Ströme in dem Leitungszweig fließen, nicht von einer korrekten Übertragung irgendwelcher Signale während dieses Ernstfalls abhängt und daher nicht unkontrolliert verzögert wird.

Die Übertragung der Anfrage-, Abfrage-, Steuer- und Bestätigungssignale kann besonders unaufwändig und/oder flexibel ausgeführt werden, wenn die Signale zwischen der Energieerzeugungsanlage und der Einspeisesteuerung drahtlos oder über den Leitungszweig übertragen werden. Für eine eindeutige Zuordnung können die zwischen einer bestimmten Energieerzeugungsanlage und der Einspeisesteuerung ausgetauschten Signale beispielsweise über bestimmte Pulsmuster, eine Frequenz oder eine in den Signalen enthaltene Adresse kodiert sein. Auch die Kommunikation zwischen der Einspeisesteuerung und der Leitungsschutzsicherung kann drahtlos oder über den Leitungszweig erfolgen. Wenn die Einspeisesteuerung und die Leitungsschutzsicherung als eine Einheit ausgebildet sind, kann die Kommunikation bzw. Steuerung jedoch insbesondere über leitende Verbindungen dieser Einheit oder über eine Datenübertragung auf optischer Grundlage (beispielsweise über Optokoppler) erfolgen.

Wenn von der Energieerzeugungsanlage nicht mehr der aktuelle Maximalstrom in den Leitungszweig eingespeist werden kann, ist es vorteilhaft, wenn der Maximalstrom um einen bestimmten Betrag gesenkt wird und der Grenzwert der Leitungsschutzsicherung um den bestimmten Betrag hochgesetzt wird, um die Stromversorgung des Leitungszweigs in dem maximal zulässigen Rahmen zu gewährleisten. Gemäß einer erfindungsgemäßen Ausführungsform wird der Maximalstrom um einen bestimmten Betrag gesenkt, wenn der von der Energieerzeugungsanlage eingespeiste Strom um mehr als einen vorgegebenen Differenzbetrag von dem Maximalstrom abweicht. Der Grenzwert der Leitungsschutzsicherung wird dabei jedoch erst nach dem Senken des Maximalstroms um den bestimmten Betrag angehoben. So wird verhindert, dass während des Anpassens des Maximalstroms bzw. des Grenzwerts der maximal zulässige Wert des Stroms in dem Leitungszweig zwischenzeitlich überschritten werden kann. Die Steuerung kann dabei wie bei dem Hochsetzen des Maximalstroms über den Austausch von entsprechenden Signalen erfolgen. Weiterhin kann die Anpassung in einem Schritt um den vorgegebenen Differenzbetrag erfolgen. Die Anpassung des Grenzwerts und des Maximalstroms kann aber auch schrittweise und/oder unter Berücksichtigung eines vorgegebenen zeitlichen Verlaufs erfolgen.

Wenn von der Energieerzeugungsanlage mehr Strom verfügbar ist als der Maximalstrom, kann vorgesehen sein, dass der über den Maximalstrom hinausgehende Strom zum Aufladen eines Energiezwischenspeichers genutzt wird. Die Entscheidung, ob Energie in dem Energiezwischenspeicher gespeichert werden soll, kann beispielsweise in Abhängigkeit davon erfolgen, ob ein weiteres Herabsetzen des Grenzwerts der Leitungsschutzsicherung und somit auch ein weiteres Hochsetzen des Maximalstroms für das Einspeisen von zusätzlichem Strom möglich ist. Es können auch andere Parameter, wie der Ladezustand des Energiezwischenspeichers, berücksichtigt werden. Die in dem Energiezwischenspeicher gespeicherte Energie kann beispielsweise zur zeitweisen Überbrückung eines erhöhten Energiebedarfs, der durch die Energieerzeugungsanlage allein nicht gedeckt werden kann, genutzt werden. Insbesondere kann so vermieden werden, dass bei kurzzeitigen Einbrüchen des von der Energieerzeugungsanlage bereitgestellten Stroms, die bei einer PV-Anlage z. B. durch schnell vorüber ziehende Wolkenfelder bedingt sind, der Maximalstrom und der Grenzwert in einem kurzen Zeitraum wiederholt hoch- bzw. herabgesetzt werden.

Insbesondere können der Strom von dem externen Energieversorgungsnetz und der Strom von der Energieerzeugungsanlage in gegenüberliegenden Endbereichen des Leitungszweigs in diesen eingespeist werden. Beispielsweise kann die Stromversorgung durch das externe Energieversorgungsnetz über eine Erdleitung erfolgen, während die Energieerzeugungsanlage auf dem Dach eines Hauses angebracht ist und im Bereich des Dachs an den Leitungszweig angeschlossen ist. Trotz der räumlichen Entfernung der Einspeisepunkte kann mit dem erfindungsgemäßen Verfahren dennoch sicher gewährleistet werden, dass der maximal zulässige Wert des Stroms in dem Leitungszweig nicht überschritten wird, indem einerseits die Einspeisung aus dem externen Energieversorgungsnetz durch die Leitungsschutzsicherung begrenzt ist und andererseits die Einspeisung von der Energieerzeugungsanlage durch den in Abhängigkeit von dem Grenzwert der Leitungsschutzsicherung kontrolliert veränderbaren Maximalstrom begrenzt ist.

Mit der Begrenzung des von der Energieerzeugungsanlage und dem externen Energieversorgungsnetz eingespeisten Stroms I wird auch die jeweils eingespeiste Leistung P begrenzt, die über P = I² R in einem festen Zusammenhang stehen, wobei R den ohmschen Widerstand des Leitungszweiges inklusive der angeschlossenen Lasten kennzeichnet.

Um die Übertragungskapazität des Leitungszweigs voll auszunutzen, kann es sinnvoll sein, dass für die Stromeinspeisung von der Energieerzeugungsanlage anstelle eines konstanten Maximalstroms ein Maximalstrom vorgegeben wird, bei dem die Auslösecharakteristik der Leitungsschutzsicherung berücksichtigt ist. Unter Berücksichtigung der Auslösecharakteristik kann dann auch ein Strom zur Einspeisung freigegeben werden, mit dem der maximal zulässige Wert des Stroms in dem Leitungszweig u. U. kurzzeitig überschritten wird, der aber so dimensioniert ist, dass er unterhalb der Auslösecharakteristik der Leitungsschutzsicherung für den betreffenden Leitungszweig liegt. Beispielsweise kann der Maximalstrom dadurch vorgegeben sein, dass der von der Energieerzeugungsanlage eingespeiste Strom I gemittelt über ein vordefiniertes Zeitintervall t einen maximalen Mittelwert nicht überschreitet oder dass der insgesamt über ein vorgegebenes Zeitintervall t eingespeiste Strom I im Quadrat, d. h. das Zeitintegral von I² über das Zeitintervall t, einen vorgegebenen Wert nicht überschreitet. Unter Anwendung dieser Ausführungsform des erfindungsgemäßen Verfahrens kann beispielsweise ausgehend von ihrem abgeregelten Betrieb - kurzzeitig in einem anderen Arbeitspunkt betrieben werden, solange gewährleistet ist, dass der Betrieb in dem anderen Arbeitspunkt aufgrund der kurzen Zeitdauer unterhalb der Auslösecharakteristik der Leitungsschutzsicherung liegt. So kann - gegebenenfalls mehrmals nacheinander bei verschiedenen Arbeitspunkten, z.B. bei verschiedenen Generatorspannungen einer Photovoltaikanlage - kurzzeitig die dort zur Verfügung stehende Generatorleistung detektiert werden und daraus die maximal mögliche Einspeiseleistung abgeschätzt werden. Ebenso kann es sinnvoll sein, die Auslösecharakteristik der Leitungsschutzsicherung in Abhängigkeit der Vorgeschichte des Leitungszweiges anzupassen, d. h. abhängig davon, wie weit der maximal zulässige Wert des Stroms innerhalb eines bestimmten Zeitraums in der unmittelbaren Vergangenheit auch tatsächlich erreicht wurde. Dies setzt voraus, dass der zeitliche Verlauf des tatsächlich eingespeisten Stroms ermittelt und die Daten an die Einspeisesteuerung übertragen werden. Hierdurch kann auf den aktuell vorliegenden Ausgangszustand der Leitung geschlossen werden, um den momentan zulässigen Wert des Maximalstroms zu ermitteln oder um zu ermitteln, ob bei einem u. U. momentanen Überschreiten des maximal zulässigen Werts des Stroms die Leitungsschutzsicherung auslösen muss.

Gemäß einer besonderen Ausführungsform des erfindungsgemäßen Verfahrens wird von mehreren Energieerzeugungsanlagen Strom in den Leitungszweig eingespeist. Dabei wird jede Energieerzeugungsanlage derart gesteuert, dass nicht mehr als ein jeweils bestimmter, aber veränderbarer Maximalstrom in den Leitungszweig eingespeist wird. Das Hochsetzen des jeweiligen Maximalstroms, um mehr Strom von der entsprechenden Energieerzeugungsanlage in den Leitungszweig einspeisen zu können, wird dabei zentral von der Einspeisesteuerung gesteuert. Indem das Hochsetzen des jeweiligen Maximalstroms zentral von der Einspeisesteuerung gesteuert wird, kann auf einfache Weise ermöglicht werden, dass der maximal zulässige Wert des Stroms in dem Leitungszweig auch zwischenzeitlich nicht überschritten wird. Um die Energieerzeugungsanlagen jeweils einzeln steuern zu können, kann vorgesehen sein, dass für den Signalaustausch verschiedene Pulsmuster und/oder verschiedene Frequenzen verwendet werden. Alternativ dazu kann vorgesehen sein, dass ein übermitteltes Datenpaket der Kommunikation in codierter Weise den oder die Empfänger und gegebenenfalls den Absender des Datenpaketes aufweist. Die Kontrolle der jeweiligen Maximalströme kann derart erfolgen, dass die Leistungsnachfrage von möglichst wenigen Energieerzeugungsanlagen erfüllt werden kann. Es kann aber auch vorgesehen sein, dass die Maximalleistungen von der Einspeisesteuerung derart gesteuert werden, dass die verschiedenen Energieerzeugungsderart erfolgen, dass die Leistungsnachfrage von möglichst wenigen Energieerzeugungsanlagen erfüllt werden kann. Es kann aber auch vorgesehen sein, dass die Maximalleistungen von der Einspeisesteuerung derart gesteuert werden, dass die verschiedenen Energieerzeugungsanlagen zu möglichst gleichen Anteilen zu dem insgesamt in den Leitungszweig eingespeisten Strom beitragen.

Eine weitere erfindungsgemäße Lösung betrifft eine Einspeisesteuerung für das Einspeisen von elektrischem Strom von einer Energieerzeugungsanlage und einem externen Energieversorgungsnetz in einen Leitungszweig einer elektrischen Installation, der für einen Strom unterhalb eines maximal zulässigen Werts ausgelegt ist. Die Einspeisesteuerung weist eine Leitungsschutzsicherung auf, die einen veränderbaren Grenzwert für den von dem externen Energieversorgungsnetz eingespeisten elektrischen Strom vorgibt. Dabei können in der Leitungsschutzsicherung zusätzlich vorgegebene Auslösecharakteristiken hinterlegt sein. Z. B. können unterschiedliche Zeitdauern vorgegeben sein, die in Abhängigkeit von der Größe des jeweils anliegenden Überstroms den entsprechenden Auslösezeitpunkt der Leitungsschutzsicherung definieren. Weiterhin weist die Einspeisesteuerung einen Controller zum Bestimmen eines Maximalstroms auf, der maximal von der Energieerzeugungsanlage eingespeist werden darf, um zu verhindern, dass der maximal zulässige Wert des Stroms in dem Leitungszweig überschritten wird. Außerdem weist die Einspeisesteuerung eine Schnittstelle zum Senden von Steuersignalen an die Energieerzeugungsanlage zur Vorgabe des Maximalstroms auf, wobei die Schnittstelle erst dann ein Steuersignal zur Vorgabe eines höheren Maximalstroms sendet, womit mehr Strom von der Energieerzeugungsanlage in den Leitungszweig eingespeist werden kann, nachdem der Grenzwert der Leitungsschutzsicherung derart angepasst ist, dass der maximal zulässige Wert des Stroms in dem Leitungszweig auch nach dem Hochsetzen des Maximalstroms nicht überschritten wird.

Insbesondere kann die Einspeisesteuerung zur Durchführung des erfindungsgemäßen Verfahrens ausgebildet sein. Dazu kann die Einspeisesteuerung beispielsweise zusätzlich eine Schnittstelle zum Empfang von von der Energieerzeugungsanlage gesendeten Anfragesignalen aufweisen, die das Hochsetzen und ggf. das Herabsetzen des Maximalstroms betreffen, um mehr Strom von der Energieerzeugungsanlage einspeisen zu können bzw. ggf. mehr Strom von dem externen Energieversorgungsnetz einspeisen zu können. Die Schnittstellen zum Senden von Steuersignalen bzw. zum Empfangen von Anfragesignalen können auch dazu geeignet ausgebildet sein, um Abfragesignale zur Abfrage des Stroms, der aktuell von der Energieerstellen zum Senden von Steuersignalen bzw. zum Empfangen von Anfragesignalen auch dazu geeignet ausgebildet sein, um Bestätigungssignale von der Leitungsschutzsicherung zur Bestätigung des Hoch- oder Herabsetzens des Grenzwerts zu empfangen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen. Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht. Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erfindungsgemäße Einspeisesteuerung für das Einspeisen von elektri-schem Strom von einer PV-Anlage und einem externen Energieversorgungsnetz in einen Leitungszweig in einem Haushalt.
- **Fig. 2**: zeigt eine erfindungsgemäße Einspeisesteuerung für das Einspeisen von elektri-schem Strom von zwei PV-Anlagen und einem externen Energieversorgungsnetz in einen Leitungszweig in einem Haushalt.
- **Fig. 3**: zeigt ein stark vereinfachtes Blockschaltbild für ein erfindungsgemäßes Ver-fahren zum Hochsetzen des Maximalstroms.
- **Fig. 4**: zeigt ein stark vereinfachtes Blockschaltbild für ein erfindungsgemäßes Ver-fahren zum Anpassen des Maximalstroms.

### FIGURENBESCHREIBUNG

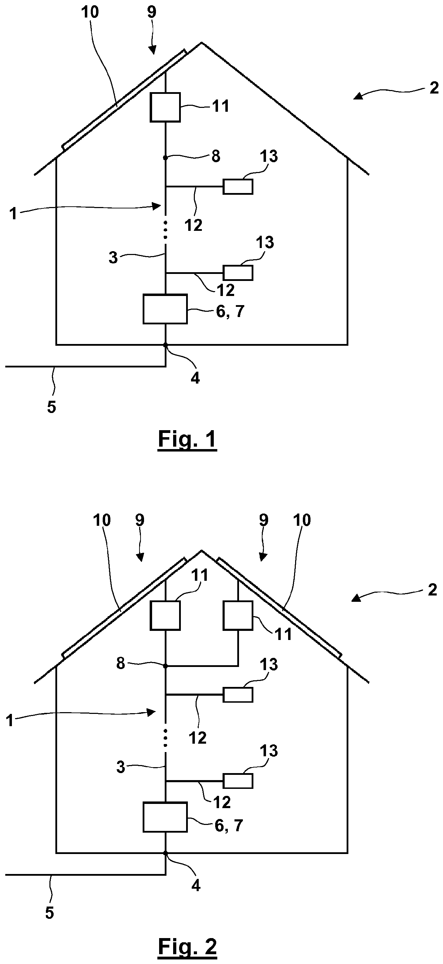

**Fig. 1** zeigt eine elektrische Installation 1 für ein Haus 2 mit einem Leitungszweig 3. Über einen Anschlusspunkt 4 ist der Leitungszweig 3 zum Einspeisen von elektrischem Strom mit einem externen Energieversorgungsnetz 5 verbunden. Dabei wird der von dem externen Energieversorgungsnetz 5 eingespeiste elektrische Strom über eine Leitungsschutzsicherung 7, die Teil einer Einspeisesteuerung 6 ist, in den Leitungszweig 3 eingespeist, wobei die Leitungsschutzsicherung 7 einen Grenzwert für den von dem externen Energieversorgungsnetz 5 eingespeisten Strom vorgibt. Weiterhin weist der Leitungszweig 3 einen Anschlusspunkt 8 für eine Energieerzeugungsanlage 9, hier eine PV-Anlage 10 mit einem zugehörigen Wechselrichter 11, auf. Wie in Fig. 1 dargestellt, kann der Leitungszweig 3 eine oder mehrere Teilzweig(e) 12 mit Lasten 13 aufweisen, die mit dem von der Energieerzeugungsanlage 9 und dem externen Energieversorgungsnetz 5 eingespeisten Strom versorgt werden.

Über den Wechselrichter 11 der Energieerzeugungsanlage 9 wird gesteuert, wie viel Strom von der PV-Anlage 10 in den Leitungszweig 3 eingespeist wird. Dabei wird das Einspeisen von dem Wechselrichter 11 derart gesteuert, dass nicht mehr als ein vorgegebener Maximalstrom von der Energieerzeugungsanlage 9 in den Leitungszweig 3 eingespeist wird. Die Steuerung des von der Energieerzeugungsanlage 9 eingespeisten Stroms kann beispielsweise unter Ausnutzung der P(U)-Kennlinie der PV-Anlage 10 erfolgen, indem der aktuelle Arbeitspunkt so gewählt wird, dass der vorgegebene Maximalstrom nicht überschritten wird. Wenn von der Steuerung des Wechselrichters 11 erkannt wird, dass aktuell mehr Strom von der Energieerzeugungsanlage 9 in den Leitungszweig 3 eingespeist werden könnte, ist es wünschenswert, den verfügbaren zusätzlichen Strom zur Versorgung der Lasten 13 zu nutzen, um weniger Strom von dem externen Energieversorgungsnetz 5 beziehen zu müssen. Würde der zusätzliche Strom ohne weitere Anpassung in den Leitungszweig 3 eingespeist, könnte es in dem Leitungszweig 3 jedoch zu einem Überstromzustand, in dem der maximal zulässige Wert für den Strom in dem Leitungszweig 3 überschritten wird, kommen, da dann unverändert viel Strom von dem externen Energieversorgungsnetz 5 und gleichzeitig mehr Strom von der Energieerzeugungsanlage 9 in den Leitungszweig 3 eingespeist werden könnte.

Der Begriff "Überstromzustand innerhalb des Leitungszweiges 3" schließt insbesondere auch den möglichen Fehlerfall eines Überstromzustandes in zumindest einem der an diesen Leitungszweig 3 angeschlossenen Teilzweige 12 mit ein. Dies ist beispielsweise dann der Fall, wenn eine größere Anzahl an Lasten 13 an einem bestimmten Teilzweig 12 angeschlossen sind und gleichzeitig betrieben werden. Auch hier werden im Allgemeinen die Lasten 13 in dem einen betrachteten Teilzweig 12 sowohl mit Strom von der Energieerzeugungsanlage 9 als auch von dem externen Energieversorgungsnetz 5 versorgt. Wenn z. B. der aus dem externen Energieversorgungsnetz 5 bezogene Strom gerade noch unterhalb des Grenzwertes zur Auslösung der Leitungsschutzsicherung 7 liegt, ergibt sich in dem betreffenden Teilzweig 12 leicht ein nicht detektierbarer Überstromzustand, wenn nicht eine entsprechende Begrenzung bzw. Anpassung des Maximalstroms der Energieerzeugungsanlage 9 vorgesehen ist. Dies gilt insbesondere auch für den Fall, dass alle an den betreffenden Teilzweig 12 angeschlossen Lasten 13 für sich gesehen zwar keinen Defekt aufweisen, insgesamt jedoch einfach zu viele Lasten 13 in dem Teilzweig 12 gleichzeitig betrieben werden.

Um einen Überstromzustand in dem Leitungszweig 3 und den hieran angeschlossenen Teilzweigen 12 zu verhindern, wird erfindungsgemäß zunächst der Grenzwert der Leitungsschutzsicherung 7 von der Einspeisesteuerung 6 gesteuert derart angepasst, dass der maximal zulässige Wert des Stroms in dem Leitungszweig 3 nicht überschritten wird, wenn der zusätzliche Strom von der Energieerzeugungsanlage 9 in den Leitungszweig 3 eingespeist wird. Erst nach dem Reduzieren des Grenzwerts der Leitungsschutzsicherung 7, womit weniger Strom von dem externen Energieversorgungsnetz 5 in den Leitungszweig 3 eingespeist werden kann, bevor die Leitungsschutzsicherung 7 auslöst, wird der Maximalstrom für die Energieerzeugungsanlage 9 Strom von der Energieerzeugungsanlage 9 in den Leitungszweig 3 eingespeist wird. Erst nach dem Reduzieren des Grenzwerts der Leitungsschutzsicherung 7, womit weniger Strom von dem externen Energieversorgungsnetz 5 in den Leitungszweig 3 eingespeist werden kann, bevor die Leitungsschutzsicherung 7 auslöst, wird der Maximalstrom für die Energieerzeugungsanlage 9 von der Einspeisesteuerung 6 gesteuert hochgesetzt. Erst dann kann ein Arbeitspunkt gewählt werden, in dem mehr Strom von der Energieerzeugungsanlage 9 zur Versorgung der Lasten 13 in den Leitungszweig 3 eingespeist wird.

Um eine zwischenzeitliche Unterversorgung des Leitungszweigs 3 und/oder ein fehlerhaftes Auslösen der Leitungsschutzsicherung 7 zu vermeiden, wird der Grenzwert der Leitungsschutzsicherung 7 vorzugsweise nicht in einem Schritt um den Betrag des von der Energieerzeugungsanlage 9 zusätzlich verfügbaren Stroms reduziert. Vielmehr erfolgt die Anpassung des Grenzwerts der Leitungsschutzsicherung 7 und des Maximalstroms für die Energieerzeugungsanlage 9 von der Einspeisesteuerung 6 kontrolliert in kleineren Schritten. Hierbei sind die Schritte vorzugsweise so zu wählen, dass der Strom, der insgesamt von der Energieerzeugungsanlage 9 und dem externen Energieversorgungsnetz 5 in den Leitungszweig 3 eingespeist werden kann, dem maximal zulässigen Wert für den Leitungszweig 3 möglichst nahekommt. Gleichzeitig ist die Schrittweite so zu wählen, dass die Steuerung nicht zu aufwändig wird und die Anpassung in möglichst kurzer Zeit erfolgen kann. Die Bestimmung des Maximalstroms, der ausgehend von dem aktuellen Grenzwert der Leitungsschutzsicherung 7 maximal von der Energieerzeugungsanlage 9 eingespeist werden darf, kann mittels eines Controllers der Einspeisesteuerung 6 erfolgen. Besonders wenig Kommunikationsaufwand ist erforderlich, wenn das Herabsetzen des Grenzwerts und das Hochsetzen des Maximalstroms auf Basis von vordefinierten Rampen vorgenommen werden. Im einfachsten Fall ist so lediglich ein Triggersignal beim Start der Rampe für das Herabsetzen des Grenzwertes der Leitungsschutzsicherung 7 erforderlich, mit dem kurz bzw. unmittelbar nach dem Start des Herabsetzens des Grenzwerts das Hochsetzen des Maximalstroms gemäß der vorgegebenen Rampe eingeleitet wird.

Bei der in Fig. 1 dargestellten elektrischen Installation 1 erfolgt die Kommunikation zwischen der Einspeisesteuerung 6 und dem Wechselrichter 11 zur Vorgabe des Maximalstroms über den Leitungszweig 3 selbst auf Basis einer sogenannten Power Line Kommunikation. Alternativ können die Einspeisesteuerung 6 und der Wechselrichter 11 jedoch auch Schnittstellen zur drahtlosen Kommunikation aufweisen.
stoffzellen, Windenergieanlagen, Blockheizkraftwerke etc. verwendet werden. Gleichfalls ist es möglich, zusätzlich neben der Energieerzeugungsanlage 9 einen (in Fig. 1 nicht dargestellten) Energiezwischenspeicher anzuschließen, der dann kurzzeitige Leistungsfluktuationen insbesondere der Energieerzeugungsanlage 9 abpuffern kann. So kann verhindert werden, dass es aufgrund von den naturgemäß auftretenden Leistungsfluktuationen zu einem ungewollt oft aufeinanderfolgenden Anpassen des Grenzwerts und des Maximalstroms kommt.

Bei der in Fig. 2 gezeigten elektrischen Installation 1 sind zwei Energieerzeugungsanlagen 9 an den Anschlusspunkt 8 zum Einspeisen von elektrischem Stroms in den Leitungszweig 3 angeschlossen. Dabei wird das Einspeisen von Strom in den Leitungszweig 3 zentral von der Einspeisesteuerung 6 mit der Leitungsschutzsicherung 7 kontrolliert. Die für die beiden Energieerzeugungsanlagen 9 vorgegebenen Maximalströme und der Grenzwert der Leitungsschutzsicherung 7 werden dabei derart aufeinander abgestimmt, dass der maximal zulässige Wert des Stroms in dem Leitungszweig 3 nicht überschritten wird. Wenn von einer der Energieerzeugungsanlagen 9 mehr Strom in den Leitungszweig 3 eingespeist werden kann, wird der Grenzwert der Leitungsschutzsicherung 7 - sofern möglich - reduziert. Nach dem Reduzieren des Grenzwerts (oder zeitverzögert dazu) wird der Maximalstrom der entsprechenden Energieerzeugungsanlage 9 angepasst. Um mehr Strom von der einen Energieerzeugungsanlage 9 einspeisen zu können, kann statt des Reduzierens des Grenzwerts der Leitungsschutzsicherung 7 der Maximalstrom für die andere Energieerzeugungsanlage 9 reduziert werden. In dem Fall wird zunächst der Maximalstrom der anderen Energieerzeugungsanlage 9 von der Einspeisesteuerung 6 gesteuert reduziert. Anschließend wird der Maximalstrom der Energieerzeugungsanlage 9, von der mehr Strom in den Leitungszweig 3 eingespeist werden kann, hochgesetzt. Eine Anpassung des Grenzwerts der Leitungsschutzsicherung 7 muss dann nicht erfolgen. Auch hier ist es möglich, die Anpassung wie weiter oben schon beschrieben in Form kleiner aufeinanderfolgender Schritte oder durch das Abfahren vordefinierter Rampen durchzuführen.

Anders als bei dem in Fig. 2 dargestellten Ausführungsbeispiel, kann die elektrische Installation 1 auch mehrere Leitungszweige 3 aufweisen, wobei für jeden Leitungszweig 3 jeweils eine Energieerzeugungsanlage 9 zum Einspeisen von Strom in den jeweiligen Leitungszweig 3 vorgesehen ist. Zum Einspeisen von Strom von dem externen Energieversorgungsnetz 5 und zur Steuerung des Einspeisens des Stroms kann die elektrische Installation 1 eine einzige, gemeinsame Einspeisesteuerung 6 mit mehreren Leitungsschutzsicherungen 7 für jeden der Leitungszweige 3 aufweisen. Für die Kommunikation zwischen der Einspeisesteuerung 6 und den Energieerzeugungsanlagen 9 kann die Einspeisesteuerung 6 eine gemeinsame Schnittstelle aufweisen. Es kann aber auch für jede Energieerzeugungsanlage 9 eine Schnittstelle vorgesehen sein. Beispielsweise kann die Kommunikation über den jeweiligen Leitungszweig 3 erfolgen.

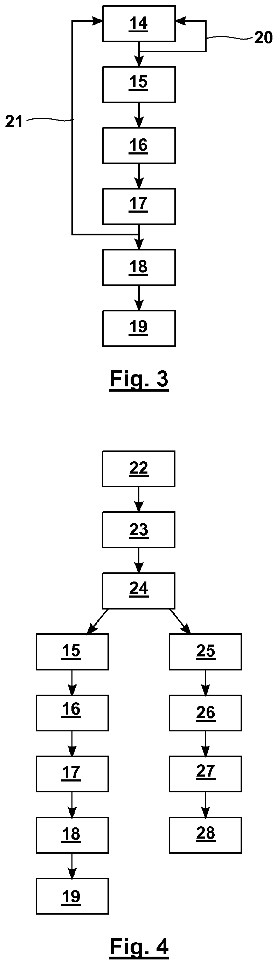

**Fig. 3** zeigt einen beispielhaften Ablauf eines erfindungsgemäßen Verfahrens: Wenn mehr Strom von der Energieerzeugungsanlage 9 in den Leitungszweig 3 eingespeist werden kann, wird in einem Verfahrensschritt 14 ein Anfragesignal von der Energieerzeugungsanlage 9 an die Einspeisesteuerung 6 gesendet. Das Anfragesignal kann dabei über eine entsprechende Schnittstelle der Einspeisesteuerung 6 empfangen werden. Wenn der Grenzwert der Leitungsschutzsicherung 7 weiter reduziert werden kann, wird in einem Verfahrensschritt 15 der Grenzwert der Leitungsschutzsicherung 7 von der Einspeisesteuerung 6 gesteuert reduziert. In einem Verfahrensschritt 16 wird dann mit einem Controller der Einspeisesteuerung 6 in Abhängigkeit von dem aktuellen Grenzwert der Maximalstrom für die Energieerzeugungsanlage 9 ermittelt. Anschließend wird in einem Verfahrensschritt 17 ein Steuersignal über die Schnittstelle der Einspeisesteuerung 6 an den Wechselrichter 11 gesendet, mit dem das Hochsetzen des Maximalstroms auf den ermittelten Maximalstrom freigegeben wird. In dem Verfahrensschritt 18 erfolgt das Hochsetzen des Maximalstroms, um mehr Strom von der Energieerzeugungsanlage 9 in den Leitungszweig 3 einzuspeisen. Danach kann optional in einem Verfahrensschritt 19 ein Bestätigungssignal von dem Wechselrichter 11 an die Einspeisesteuerung 6 gesendet werden, um dieser zu bestätigen, dass der Maximalstrom wie beabsichtigt hochgesetzt wurde.

Neben den Verfahrensschritten 14 bis 19 können weitere Verfahrensschritte vorgesehen sein und/oder einige der Verfahrensschritte zu einem Verfahrensschritt zusammengefasst sein. Wie in Fig. 3 angedeutet, kann beispielsweise eine Sicherheitsschleife 20 dafür vorgesehen sein, dass nach dem Senden des Anfragesignals in Verfahrensschritt 14 ein weiteres Anfragesignal von dem Wechselrichter 11 gesendet wird, wenn nicht innerhalb einer vorgegebenen Zeitspanne ein Steuersignal empfangen worden ist. So kann verhindert werden, dass verspätet ein Maximalstrom hochgesetzt wird, obwohl der Maximalstrom, z. B. aufgrund veränderter Wetterverhältnisse, momentan nicht mehr von der Energieerzeugungsanlage 9 eingespeist werden kann. Außerdem kann vorgesehen sein, dass eine Änderung des Maximalstroms in Verfahrensschritt 18 nur dann vorgenommen wird, wenn das Steuersignal innerhalb eines vorgegebenen Zeitintervalls nach dem Senden des Anfragesignals im Verfahrensschritt 14 von dem Wechselrichter 11 empfangen wird. Wenn beispielsweise ein Steuersignal empfangen wird, ohne dass zuvor ein Anfragesignal gesendet worden ist oder das Senden eines Anfragesignals mehr als eine vorgegebene Zeitspanne zurückliegt, kann statt des Hochsetzens des Maximalstroms in Verfahrensschritt 18 eine Sicherheitsschleife 21 ausgeführt werden beginnend mit dem Senden eines Anfragesignals gemäß Verfahrensschritt 14. Gegebenenfalls kann innerhalb der Sicherheitsschleifen 20, 21 nochmals ein Abgleich der aktuell vorliegenden Werte des Grenzwerts der Leitungsschutzsicherung 7, des Maximalstroms der Energieerzeugungsanlage 9 und des für den Leitungszweig 3 maximal zulässigen Stroms erfolgen. Passen diese Werte nicht zueinander, weil z. B. ein Herabsetzen des Grenzwerts für die Leitungsschutzsicherung 7 ohne das korrespondierende Hochsetzen des Maximalstroms der Energieerzeugungsanlage 9 erfolgte, so lässt sich dieser unpassende Zustand korrigieren und ein korrekter Ausgangszustand kann wieder hergestellt werden. Weiterhin kann vorgesehen sein, dass das Reduzieren des Grenzwerts in Verfahrensschritt 15, das Ermitteln des Maximalstroms in Verfahrensschritt 16 und das Senden des Steuersignals in Verfahrensschritt 17 in einem gemeinsamen Verfahrensschritt ausgeführt werden, wobei in dem Steuersignal eine Zeitinformation enthalten ist, wann der Maximalstrom hochgesetzt werden darf. Dies ist insbesondere dann sinnvoll, wenn das Herabsetzen des Grenzwertes und das Hochsetzen des Maximalstroms wie weiter oben schon beschrieben in Form kleiner aufeinanderfolgender Schritte oder durch das Abfahren vordefinierter Rampen bzw. zeitlicher Verläufe durchgeführt wird.

**Fig. 4** zeigt einen weiteren beispielhaften Ablauf eines erfindungsgemäßen Verfahrens: In Verfahrensschritt 22 wird ein Abfragesignal über die Schnittstelle der Einspeisesteuerung 6 an den Wechselrichter 11 gesendet, zum Abfragen des Stroms, der aktuell von der Energieerzeugungsanlage 9 in den Leitungszweig 3 eingespeist werden könnte. In Verfahrensschritt 23 sendet der Wechselrichter 11 ein Antwortsignal an die Einspeisesteuerung 6, um den aktuell möglichen Strom mitzuteilen. Das Antwortsignal kann auch als eine Art Anfragesignal interpretiert werden, da in Abhängigkeit von dem Antwortsignal eine Anpassung des Grenzwerts der Leitungsschutzsicherung 7 und des Maximalstroms der Energieerzeugungsanlage 9 eingeleitet wird ähnlich wie mit dem Senden des Anfragesignals in Verfahrensschritt 14. In Verfahrensschritt 24 erfolgt ein Vergleich des Stroms, der aktuell von der Energieerzeugungsanlage 9 in den Leitungszweig 3 eingespeist werden könnte mit dem aktuell vorgegebenen Maximalstrom. Wenn aktuell mehr Strom eingespeist werden könnte, als durch den Maximalstrom vorgegeben ist, wird gemäß dem in Fig. 3 dargestellten Ablauf in den Verfahrensschritten 15 bis 19 die Anpassung des Grenzwerts und des Maximalstroms vorgenommen.

Wenn der Vergleich des Stroms, der aktuell von der Energieerzeugungsanlage 9 in den Leitungszweig 3 eingespeist werden kann, mit dem aktuell vorgegebenen Maximalstrom ergibt, dass von der Energieerzeugungsanlage 9 aktuell nur weniger als der Maximalstrom in den Leitungszweig 3 eingespeist werden kann, werden mit den Verfahrensschritten 25 bis 28 der Maximalstrom und der Grenzwert der Leitungsschutzsicherung 7 angepasst, um eine potentielle Unterversorgung des Leitungszweigs 3 zu verhindern. Dazu muss der Grenzwert der Leitungsschutzsicherung 7 hochgesetzt werden, um mehr Strom von dem externen Energieversorgungsnetz 5 in den Leitungszweig 3 einspeisen zu können. Um einen zwischenzeitlichen Überstromzustand zu verhindern, muss vor dem Hochsetzen des Grenzwerts zunächst der Maximalstrom reduziert werden. Dazu wird in einem Verfahrensschritt 25 ein Steuersignal von der Schnittstelle der Einspeisesteuerung 6 an den Wechselrichter 11 gesendet, mit dem ein kleinerer Maximalstrom als der aktuelle Maximalstrom vorgegeben wird. Gesteuert durch das Steuersignal wird in Verfahrensschritt 26 der vorgegebene Maximalstrom reduziert. In Verfahrensschritt 27 wird ein Bestätigungssignal von dem Wechselrichter 11 an die Einspeisesteuerung 6 gesendet, mit dem bestätigt wird, dass der Maximalstrom reduziert worden ist. In Verfahrensschritt 28 kann dann der Grenzwert der Leitungsschutzsicherung 7 hochgesetzt werden, womit mehr Strom von dem externen Energieversorgungsnetz 5 in den Leitungszweig 3 eingespeist werden kann, ohne dass dies zu einem Auslösen der Leitungsschutzsicherung 7 führt.

Um einerseits ein Fehlauslösen der Leitungsschutzsicherung 7 und andererseits einen möglichst umfangreichen Kommunikationsaufwand zu vermeiden, ist es auch hier sinnvoll, wenn das Hochsetzen des Grenzwerts für die Leitungsschutzsicherung 7 und das Herabsetzen des Maximalstroms der Energieerzeugungsanlage 9 wie weiter oben schon beschrieben in Form kleiner aufeinanderfolgender Schritte oder auf Basis des Abfahrens vordefinierter aufeinander abgestimmter Rampen bzw. zeitlicher Verläufe durchgeführt wird. Um einen Überstromzustand sicher zu verhindern, muss dabei sichergestellt sein, dass zuerst das Herabsetzen des Maximalstroms der Energieerzeugungsanlage 9 gemäß einer vorgegebenen Rampe oder einem vorgegeben zeitlichen Verlauf beginnt, bevor der Grenzwert für die Leitungsschutzsicherung 7 gemäß der vorgegebenen Rampe oder dem vorgegebenen zeitlichen Verlauf hochgesetzt wird.

### BEZUGSZEICHENLISTE

- 1: elektrische Installation
- 2: Haus
- 3: Leitungszweig
- 4: Anschlusspunkt
- 5: externes Energieversorgungsnetz
- 6: Einspeisesteuerung
- 7: Leitungsschutzsicherung
- 8: Anschlusspunkt
- 9: Energieerzeugungsanlage
- 10: PV-Anlage
- 11: Wechselrichter
- 12: Teilzweig
- 13: Lasten
- 14: Verfahrensschritt
- 15: Verfahrensschritt
- 16: Verfahrensschritt
- 17: Verfahrensschritt
- 18: Verfahrensschritt
- 19: Verfahrensschritt
- 20: Sicherheitsschleife
- 21: Sicherheitsschleife
- 22: Verfahrensschritt
- 23: Verfahrensschritt
- 24: Verfahrensschritt
- 25: Verfahrensschritt
- 26: Verfahrensschritt
- 27: Verfahrensschritt
- 28: Verfahrensschritt

## Patentansprüche

1. Verfahren zum Einspeisen von elektrischem Strom in einen durch eine Leitungsschutzsicherung (7) abgesicherten Leitungszweig (3) einer elektrischen Installation (1), der für einen Strom bis zu einem maximal zulässigen Wert ausgelegt ist, wobei
- in den Leitungszweig (3) elektrischer Strom von einem externen Energieversorgungsnetz (5) und elektrischer Strom von einer Energieerzeugungsanlage (9) eingespeist werden,
- der von dem externen Energieversorgungsnetz (5) in den Leitungszweig (3) eingespeiste elektrische Strom durch die Leitungsschutzsicherung (7), die einen Grenzwert für den eingespeisten elektrischen Strom vorgibt, begrenzt wird und
- das Einspeisen des von der Energieerzeugungsanlage (9) erzeugten elektrischen Stroms derart gesteuert wird, dass nicht mehr als ein bestimmter, aber veränderbarer Maximalstrom eingespeist wird,
**dadurch gekennzeichnet, dass** der Maximalstrom von einer Einspeisesteuerung (6) gesteuert erst dann hochgesetzt wird, um mehr elektrischen Strom von der Energieerzeugungsanlage (9) in den Leitungszweig (3) einspeisen zu können, nachdem der Grenzwert der Leitungsschutzsicherung (7) von der Einspeisesteuerung (6) gesteuert derart herabgesetzt wurde, dass der maximal zulässige Wert des Stroms in dem Leitungszweig (3) auch nach dem Hochsetzen des Maximalstroms nicht überschritten wird.

2. Verfahren nach Anspruch 1, **dadurch gekennzeichnet, dass** der Grenzwert und der Maximalstrom von der Einspeisesteuerung (6) gesteuert schrittweise und/oder unter Berücksichtigung eines vorgegebenen zeitlichen Verlaufs angepasst werden.

3. Verfahren nach einem der vorhergehenden Ansprüche, **dadurch gekennzeichnet, dass**
- von der Energieerzeugungsanlage (9) ein Anfragesignal an die Einspeisesteuerung (6) gesendet wird, wenn mehr elektrischer Strom als der aktuelle Maximalstrom von der Energieerzeugungsanlage (9) in den Leitungszweig (3) eingespeist werden könnte,
- der Grenzwert der Leitungsschutzsicherung (7) von der Einspeisesteuerung (6) gesteuert um einen bestimmten Betrag herabgesetzt wird und
- ein Steuersignal von der Einspeisesteuerung (6) an die Energieerzeugungsanlage (9) gesendet wird, mit dem das Hochsetzen des Maximalstroms für das Einspeisen von zusätzlichem Strom um den bestimmten Betrag freigegeben wird.

4. Verfahren nach Anspruch 3, **dadurch gekennzeichnet, dass** der Maximalstrom nach dem Senden des Anfragesignals nur dann hochgesetzt wird, wenn das Steuersignal innerhalb eines vorgegeben Zeitintervalls von der Energieerzeugungsanlage (9) empfangen wird.

5. Verfahren nach Anspruch 3 oder 4, **dadurch gekennzeichnet, dass** nach einem vorgegebenen Zeitintervall, in dem kein Steuersignal als Reaktion auf ein Anfragesignal empfangen worden ist, ein weiteres Anfragesignal von der Energieerzeugungsanlage (9) an die Einspeisesteuerung (6) gesendet wird.

6. Verfahren nach einem der vorhergehenden Ansprüche, **dadurch gekennzeichnet, dass** nach dem Hochsetzen des Maximalstroms und/oder dem Herabsetzen des Grenzwerts ein Bestätigungssignal an die Einspeisesteuerung (6) gesendet wird.

7. Verfahren nach einem der Ansprüche 3 bis 6, **dadurch gekennzeichnet, dass** die zwischen der Energieerzeugungsanlage (9) und der Einspeisesteuerung (6) ausgetauschten Signale drahtlos oder über den Leitungszweig (3) übertragen werden.

8. Verfahren nach einem der vorhergehenden Ansprüche, **dadurch gekennzeichnet, dass** der Maximalstrom um einen bestimmten Betrag herabgesetzt wird, wenn der von der Energieerzeugungsanlage (9) eingespeiste elektrische Strom um mehr als einen vorgegebenen Differenzbetrag von dem Maximalstrom abweicht, und der Grenzwert der Leitungsschutzsicherung (7) erst nach dem Herabsetzen des Maximalstroms um den bestimmten Betrag hochgesetzt wird.

9. Verfahren nach einem der vorhergehenden Ansprüche, **dadurch gekennzeichnet, dass** über den Maximalstrom hinausgehender elektrischer Strom von der Energieerzeugungsanlage (9) zum Aufladen eines Energiezwischenspeichers genutzt wird und/oder zumindest zeitweise elektrischer Strom von dem/einem Energiezwischenspeicher in den Leitungszweig (3) eingespeist wird, wenn von der Energieerzeugungsanlage (9) weniger als der Maximalstrom eingespeist wird.

10. Verfahren nach einem der vorhergehenden Ansprüche, **dadurch gekennzeichnet, dass** der elektrische Strom von dem externen Energieversorgungsnetz (5) und der elektrische Strom von der Energieerzeugungsanlage (9) in gegenüberliegenden Endbereichen des Leitungszweigs (3) eingespeist werden.

11. Verfahren nach einem der vorhergehenden Ansprüche, **dadurch gekennzeichnet, dass** der Maximalstrom eine Auslösecharakteristik der Leitungsschutzsicherung (7) berücksichtigt.

12. Verfahren nach einem der vorhergehenden Ansprüche, **dadurch gekennzeichnet, dass** von mehreren Energieerzeugungsanlagen (9) elektrischer Strom in den Leitungszweig (3) eingespeist wird, wobei jede Energieerzeugungsanlage (9) derart gesteuert wird, dass nicht mehr als ein jeweils bestimmter, aber veränderbarer Maximalstrom in den Leitungszweig (3) eingespeist wird, und wobei das Hochsetzen des jeweiligen Maximalstroms, um mehr elektrischen Strom von der entsprechenden Energieerzeugungsanlage (9) in den Leitungszweig (3) einspeisen zu können, zentral von der Einspeisesteuerung (6) gesteuert wird.

13. Einspeisesteuerung (6) für das Einspeisen von elektrischem Strom von einer Energieerzeugungsanlage (9) und einem externen Energieversorgungsnetz (5) in einen durch eine Leitungsschutzsicherung (7) abgesicherten Leitungszweig (3) einer elektrischen Installation (1), der für einen Strom unterhalb eines maximal zulässigen Werts ausgelegt ist,
- wobei die Leitungsschutzsicherung (7) einen Grenzwert für den von dem externen Energieversorgungsnetz (5) eingespeisten elektrischen Strom vorgibt,
- wobei die Einspeisesteuerung (6) einen Controller zum Bestimmen eines Maximalstroms aufweist, der maximal von der Energieerzeugungsanlage (9) eingespeist werden darf, um zu verhindern, dass der maximal zulässige Wert des Stroms in dem Leitungszweig (3) überschritten wird, und
- wobei die Einspeisesteuerung (6) eine Schnittstelle zum Senden von Steuersignalen an die Energieerzeugungsanlage (9) zur Vorgabe des Maximalstroms aufweist,
**dadurch gekennzeichnet, dass** die Schnittstelle erst dann ein Steuersignal zur Vorgabe eines höheren Maximalstroms sendet, womit mehr elektrischer Strom von der Energieerzeugungsanlage (9) in den Leitungszweig (3) eingespeist werden kann, nachdem der Grenzwert der Leitungsschutzsicherung (7) derart herabgesetzt ist, dass der maximal zulässige Wert des Stroms in dem Leitungszweig (3) auch nach dem Hochsetzen des Maximalstroms nicht überschritten wird.

14. Einspeisesteuerung (6) nach Anspruch 13, **dadurch gekennzeichnet, dass** die Einspeisesteuerung (6) eine Schnittstelle zum Empfang von von der Energieerzeugungsanlage (9) gesendeten Anfragesignalen aufweist, die das Hochsetzen des Maximalstroms betreffen, um mehr elektrischen Strom von der Energieerzeugungsanlage (9) einspeisen zu können.

## Claims

1. A method for the feeding of electrical current into a line branch (3) of an electrical installation (1), the line branch (3) being protected by a line protection fuse (7) and designed for a current up to a maximum permissible value, wherein
- electrical current from an external energy supply network (5) and electrical current from an energy generating system (9) are fed into the line branch (3), wherein
- the electrical current fed into the line branch (3) from the external energy supply network (5) is limited by the line protection fuse (7), which predetermines a limit value for the electrical current fed in, and wherein
- the feeding in of the electrical current generated by the energy generating system (9) is controlled in such a way that no more than a specific, but variable maximum current is fed in,
**characterized in that** the maximum current is only increased, under the control of a feed control (6), to allow more electrical current from the energy generating system (9) to be fed into the line branch (3) after the limit value of the line protection fuse (7) has been decreased, under the control of the feed control (6), in such a way that the maximum permissible value of the current in the line branch (3) is not exceeded even after the increase of the maximum current.

2. The method as claimed in claim 1, **characterized in that** the limit value and the maximum current are adapted, under the control of the feed control (6), stepwise and/or with a predetermined variation over time being taken into account.

3. The method as claimed in one of the preceding claims, **characterized in that**
- when more electrical current than the maximum current at the particular time could be fed into the line branch (3) from the energy generating system (9), a request signal is sent from the energy generating system (9) to the feed control (6),
- the limit value of the line protection fuse (7) is decreased, under the control of the feed control (6), by a specific amount and
- a control signal enabling the increase of the maximum current for the feeding in of additional current by the specific amount is sent from the feed control (6) to the energy generating system (9).

4. The method as claimed in claim 3, **characterized in that** the maximum current is only increased after the sending of the request signal if the control signal is received within a predetermined time interval by the energy generating system (9).

5. The method as claimed in claim 3 or 4, **characterized in that**, after a predetermined time interval in which no control signal has been received in response to a request signal, a further request signal is sent by the energy generating system (9) to the feed control (6).

6. The method as claimed in one of the preceding claims, **characterized in that** a confirmation signal is sent to the feed control (6) after the increase of the maximum current and/or the decrease of the limit value.

7. The method as claimed in one of claims 3 to 6, **characterized in that** the signals exchanged between the energy generating system (9) and the feed control (6) are transmitted wirelessly or via the line branch (3).

8. The method as claimed in one of the preceding claims, **characterized in that** the maximum current is decreased by a specific amount if the electrical current fed in from the energy generating system (9) deviates from the maximum current by more than a predetermined differential amount, and the limit value of the line protection fuse (7) is only increased by the specific amount after the decrease of the maximum current.

9. The method as claimed in one of the preceding claims, **characterized in that** electrical current from the energy generating system (9) in excess of the maximum current is used for charging an energy buffer store and/or electrical current from the/an energy buffer store is at least temporarily fed into the line branch (3) when less than the maximum current is fed in from the energy generating system (9).

10. The method as claimed in one of the preceding claims, **characterized in that** the electrical current from the external energy supply network (5) and the electrical current from the energy generating system (9) are fed in in opposite end sections of the line branch (3).

11. The method as claimed in one of the preceding claims, **characterized in that** the maximum current takes into account a triggering characteristic of the line protection fuse (7).

12. The method as claimed in one of the preceding claims, **characterized in that** electrical current from a plurality of energy generating systems (9) is fed into the line branch (3), wherein each energy generating system (9) is controlled in such a way that no more than a respectively specific, but variable maximum current is fed into the line branch (3), and wherein the increase of the respective maximum current to allow more electrical current from the corresponding energy generating system (9) to be fed into the line branch (3) is controlled centrally by the feed control (6).

13. A feed control (6) for the feeding of electrical current from an energy generating system (9) and an external energy supply network (5) into a line branch (3) of an electrical installation (1), the line branch (3) being protected by a line protection fuse (7) and designed for a current below a maximum permissible value,
- wherein the line protection fuse (7) predetermines a limit value for the electrical current fed in from the external energy supply network (5),
- wherein the feed control (6) comprises a controller for determining a maximum current that may be fed in from the energy generating system (9) as a maximum in order to prevent the maximum permissible value of the current in the line branch (3) from being exceeded, and
- wherein the feed control (6) comprises an interface for sending control signals to the energy generating system (9) for predetermining the maximum current,
**characterized in that** the interface only sends a control signal for predetermining a higher maximum current, whereby more electrical current can be fed into the line branch (3) from the energy generating system (9), after the limit value of the line protection fuse (7) has been decreased in such a way that the maximum permissible value of the current in the line branch (3) is not exceeded even after the increase of the maximum current.

14. The feed control (6) as claimed in claim 13, **characterized in that** the feed control (6) comprises an interface for receiving request signals sent by the energy generating system (9) that concern the increase of the maximum current in order to be able to feed in more electrical current from the energy generating system (9).

## Revendications

1. Procédé destiné à injecter un courant électrique dans un tronçon de lignes (3) protégé par un fusible de sécurité (7) d'une installation électrique (1), qui est dimensionné pour un courant jusqu'à une valeur maximale autorisée, lors duquel
- on injecte dans le tronçon de ligne (3) du courant électrique provenant d'un réseau d'alimentation énergétique externe (5) et du courant électrique provenant d'un système de production d'énergie (9),
- le courant électrique injecté à partir du réseau d'alimentation énergétique externe (5) dans le tronçon de ligne (3) est limité par le fusible de sécurité (7), qui prédéfinit une valeur limite pour le courant électrique injecté et
- l'injection du courant électrique généré par le système de production d'énergie (9) est commandée de telle sorte que pas plus d'un courant maximal déterminé, mais variable soit injecté,
**caractérisé en ce que** le courant maximal commandé par un système de commande d'injection (6) n'est amené à la hausse pour pouvoir injecter plus de courant électrique provenant du système de production d'énergie (9) dans le tronçon de ligne (3) qu'une fois que la valeur limite du fusible de sécurité (7) commandée par le système de commande d'injection (6) n'a été amenée à la baisse de sorte que la valeur maximale autorisée du courant dans le tronçon de ligne (3) ne soit pas dépassée, même après la hausse du courant maximal.

2. Procédé selon la revendication 1, **caractérisé en ce que** la valeur limite et le courant maximal commandés par le système de commande d'injection (6) sont adaptés graduellement et/ou sous considération d'une courbe prédéfinie dans le temps.

3. Procédé selon l'une quelconque des revendications précédentes, **caractérisé en ce que**
- le système de production d'énergie (9) envoie un signal d'interrogation au système de commande d'injection (6) si plus de courant électrique que le courant maximal pourrait être injecté par le système de production d'énergie (9) dans le tronçon de ligne (3),
- la valeur limite du fusible de sécurité (7) commandée par le système de commande d'injection (6) est amenée à la baisse d'un montant déterminé,
- il envoyé par le système de commande d'injection (6) au système de production d'énergie (9) un signal de commande au moyen duquel la hausse du courant maximal pour l'injection de courant supplémentaire de la valeur du montant déterminé est validé.

4. Procédé selon la revendication 3, **caractérisé en ce que** le courant maximal n'est amené à la hausse après l'envoi du signal d'interrogation que si le signal de commande est réceptionné dans un intervalle de temps prédéfini par le système de production d'énergie (9).

5. Procédé selon la revendication 3 ou 4, **caractérisé en ce qu'**après un intervalle de temps prédéfini, dans lequel aucun signal de commande n'a été réceptionné, en réaction à un signal d'interrogation, un autre signal d'interrogation est envoyé par le système de production d'énergie (9) au système de commande d'injection (6).

6. Procédé selon l'une quelconque des revendications précédentes, **caractérisé en ce qu'**après la hausse du courant maximal et/ou la baisse de la valeur limite, un signal de confirmation est envoyé au système de commande d'injection (6).

7. Procédé selon l'une quelconque des revendications 3 à 6, **caractérisé en ce que** les signaux échangés entre le système de production d'énergie (9) et le système de commande d'injection (6) sont transmis sans fil ou via le tronçon de ligne (3).

8. Procédé selon l'une quelconque des revendications précédentes, **caractérisé en ce que** le courant maximal est amené à la baisse d'un montant déterminé lorsque le courant électrique injecté à partir du système de production d'énergie (9) diffère de plus d'un montant différentiel prédéfini du courant maximal et la valeur limite du fusible de sécurité (7) n'est amenée à la hausse de la valeur du montant déterminé qu'après la baisse du courant maximal.

9. Procédé selon l'une quelconque des revendications précédentes, **caractérisé en ce que** le courant électrique dépassant le courant maximal est utilisé par le système de production d'énergie (9) pour charger un accumulateur intermédiaire d'énergie et/ou au moins temporairement, du courant électrique est injecté dans le tronçon de ligne (3) à partir du/d'un accumulateur intermédiaire d'énergie, lorsque le système de production d'énergie (9) injecte moins que la courant maximal.

10. Procédé selon l'une quelconque des revendications précédentes, **caractérisé en ce que** le courant électrique provenant du réseau d'alimentation énergétique externe (5) et le courant électrique provenant du système de production d'énergie (9) sont injectés dans des zones d'extrémité opposées du tronçon de ligne (3).

11. Procédé selon l'une quelconque des revendications précédentes, **caractérisé en ce que** le courant maximal tient compte d'une caractéristique de déclenchement du fusible de sécurité (7).

12. Procédé selon l'une quelconque des revendications précédentes, **caractérisé en ce que** plusieurs systèmes de production d'énergie (9) injectent du courant électrique dans le tronçon de ligne (3), chaque système de production d'énergie (9) étant commandé de telle sorte que pas plus d'un courant maximal respectivement déterminé mais variable soit injecté dans le tronçon de ligne (3) et la hausse du courant maximal respectif, pour pouvoir injecter plus de courant électrique du système de production d'énergie (9) correspondant dans le tronçon de ligne (3) étant commandée de manière centralisée par le système de commande d'injection (6).

13. Système de commande d'injection (6) pour l'injection de courant électrique à partir d'un système de production d'énergie (9) et d'un réseau d'alimentation énergétique externe (5) dans un tronçon de ligne (3) sécurisé par un fusible de sécurité (7) d'une installation électrique (1), qui est dimensionné pour un courant inférieur à une valeur maximale autorisée,
- le fusible de sécurité (7) prédéfinissant une valeur limite pour le courant électrique injecté à partir du réseau d'alimentation énergétique externe (5),
- le système de commande d'injection (6) comportant un contrôleur, destiné à déterminer le courant maximal qui peut être injecté au maximum par le système de production d'énergie (9), pour empêcher que la valeur maximale autorisée pour le courant dans le tronçon de ligne (3) soit dépassée et
- le système de commande d'injection (6) comportant une interface pour envoyer des signaux de commande au système de production d'énergie (9) pour prédéfinir le courant maximal,
**caractérisé en ce que** l'interface n'envoie un signal de commande pour prédéfinir un courant maximal plus élevé à l'aide duquel plus de courant électrique peut être injecté par le système de production d'énergie (9) dans le tronçon de ligne (3) qu'une fois que la valeur limite du fusible de sécurité (7) est amenée à la baisse de sorte que la valeur maximale autorisée du courant dans le tronçon de ligne (3) ne soit pas dépassée, même après la hausse du courant maximal.

14. Système de commande d'injection (6) selon la revendication 13, **caractérisé en ce que** le système de commande d'injection (6) comporte une interface pour réceptionner des signaux d'interrogation envoyés par le système de production d'énergie (9) qui concernent la hausse du courant, pour pouvoir injecter plus de courant électrique à partir du système de production d'énergie (9).
